# EUROPÄISCHE PATENTSCHRIFT

(11) **EP 2 844 953 B1**
(45) Veröffentlichungstag und Bekanntmachung des Hinweises auf die Patenterteilung: **17.02.2016**
(21) Anmeldenummer: 13718863.7
(22) Anmeldetag: 30.04.2013
(51) Int. Cl.: G01B 21/22, G01B 5/008, G01B 21/04

(54) **VERFAHREN ZUR BESTIMMUNG DER ACHSE EINES DREHTISCHES BEI EINEM KOORDINATENMESSGERÄT**
METHOD FOR DETERMINING THE AXIS OF A TURNTABLE OF A COORDINATE MEASURING DEVICE
PROCÉDÉ DE DÉTERMINATION D'UN AXE D'UNE TABLE TOURNANTE DANS UN APPAREIL DE MESURE DE COORDONNÉES

(30) Priorität: 03.05.2012 DE 102012207336
(43) Veröffentlichungstag der Anmeldung: 11.03.2015
(73) Patentinhaber: Carl Zeiss Industrielle Messtechnik GmbH, 73447 Oberkochen (DE)
(72) Erfinder: WIMMER, Martin, 89555 Steinheim (DE)
(74) Vertreter: Patentanwälte Bressel und Partner mbB
(86) Internationale Anmeldenummer: PCT/EP2013/059001
(87) Internationale Veröffentlichungsnummer: WO 2013/164344

(56) Entgegenhaltungen:
- WO-A2-02/090879
- DE-A1- 4 106 168
- DE-A1-102010 037 352

## Beschreibung

Die vorliegende Erfindung betrifft ein neuartiges Verfahren zur Bestimmung der Lage der Achse eines Drehtisches bei einem Koordinatenmessgerät.

Der Referenzpunkt eines Koordinatenmessgeräts (KMG) ist der Ursprung des Gerätekoordinatensystems. Unter einem "Gerätekoordinatensystem" ist das vorgegebene Koordinatensystem des KMG zu verstehen, welches parallel zu den Verfahrachsen des KMG liegt. Auf den Referenzpunkt beziehen sich alle Messungen und abgeleiteten Berechnungen. Der Referenzpunkt wird durch eine sog. Referenzpunktfahrt ermittelt. Die Referenzpunktfahrt ist eine automatische Messroutine und Voraussetzung für alle Messungen. Eine Referenzpunktfahrt wird zumindest nach Inbetriebnahme des KMG durchgeführt. Die Messung des Referenzpunkts muss zu späteren Zeitpunkten wiederholt werden, weil der Referenzpunkt durch Temperatureinflüsse und andere Einflüsse driftet.

Falls bei einem KMG ein Drehtisch verwendet wird, muss nach jeder Referenzpunktfahrt die Lage der Rotationsachse des Drehtisches (auch bezeichnet als Drehtischachse oder RT-Achse, RT = Rotationstisch) im Gerätekoordinatensystem neu bestimmt werden. Die Drehtischachse definiert die genaue Position des Drehtischs bezüglich des Referenzpunktes (Geräte-Nullpunkts) sowie die Verkippung bezüglich der KMG-Achsen, also die Lage im GeräteKoordinatensystem. Alle Messelemente, Prüfmerkmale und Koordinatensysteme werden bei der Drehung des Drehtischs rechnerisch um die RT-Achse gedreht. Fehler beim Einmessen der RT-Achse wirken sich also unmittelbar auf die Messgenauigkeit aus.

Eine regelmäßige Neubestimmung der Lage der RT-Achse ist auch wegen sich ändernder Umgebungstemperatur erforderlich. Generell sollte bei jeder Tastereinmessung auch die Drehtischachse neu eingemessen werden. Bei starken Temperaturschwankungen ist es oft sinnvoll, die Drehtischachse vor jeder Werkstückmessung neu einzumessen.

Methoden zur Bestimmung der Lage einer Drehtischachse im Gerätekoordinatensystem eines KMG sind an sich bekannt und in verschiedenen Varianten beispielsweise beschrieben in WO02090879A2. Diese Schrift betrifft ein Verfahren zum Bestimmen von Eigenschaften eines Koordinatenmessgeräts durch Antasten eines Testobjekts, wobei das Koordinatenmessgerät neben einer Basis, einer Tastspitze und einem Sensorsystem eine bezüglich der Basis um eine Drehachse drehbare Werkstückhalterung zur Halterung des anzutastenden Werkstücks umfasst. Das Testobjekt umfasst wenigstens zwei Testkörper, und ein jeder Testkörper weist eine solche Oberfläche auf, dass durch Antasten der Oberfläche mit der Tastspitze Koordinaten von wenigstens einem bezüglich der Oberfläche des Testkörpers fest angeordneten Bezugspunkt des Testkörpers im Koordinatensystem der Basis bestimmbar sind. Die wenigstens zwei Testkörper sind an der Werkstückhalterung derart fest anbringbar, dass sie in Richtung der Drehachse einen Abstand voneinander aufweisen. Bei dem Verfahren wird das Testobjekt an der Werkstückhalterung angebracht und es werden in mehreren Drehstellungen jeweils die Bezugspunkte der Testkörper bestimmt. Aus den bestimmten Bezugspunkten wird die Drehachse im Koordinatensystem der Basis, dem Gerätekoordinatensystem, bestimmt.

Bei üblichen Verfahren zur Bestimmung der Lage der RT-Achse, wie z.B. beschrieben in WO02090879A2, wird ein Körper, beispielsweise eine Kugel oder ein Prüfzylinder auf dem Drehtisch befestigt und angetastet, am besten in mehreren Drehtischpositionen. Daraus wird die RT-Achse berechnet. Diese Verfahren sind aber in der Regel nur anwendbar, wenn sich kein Werkstück auf dem Drehtisch befindet. Der Nachteil besteht also darin, dass ein Werkstück, dessen Vermessung noch nicht beendet ist, vom Drehtisch entfernt werden muss, um die Lage der RT-Achse neu zu bestimmen.

Es gibt auch Verfahren zur Einmessung der RT-Achse direkt am Werkstück. Diese Verfahren setzen jedoch ausreichend glatte Flächen am Werkstück voraus und für jedes Werkstück ist eine Neuprogrammierung erforderlich.

Als weitere Lösung ist die sogenannte RT-Offset-Korrektur bekannt, beispielsweise aus der Software Umess-UX der Carl Zeiss AG. Dabei wird eine Einmesskugel möglichst nahe bei der RT-Achse aber neben dem Drehtischteller auf der Gerätebasis des KMG befestigt. Anschlie-ßend werden die Koordinaten der RT-Achse und die Koordinaten der Einmesskugel, bzw. die Koordinaten des Mittelpunktes der Einmesskugel, im Gerätekoordinatensystem bestimmt und diese Koordinaten zueinander in Bezug gesetzt, wodurch der Abstand zwischen RT-Achse und dem Mittelpunkt der Einmesskugel erhalten wird. Nach einer Referenzpunktfahrt wird die Position der Einmesskugel mit einem kalibrierten Taststift erneut bestimmt und aus dem zuvor ermittelten Abstand zwischen der Einmesskugel und RT-Achse die Lage der RT-Achse neu ermittelt. Dieses Verfahren ist zwar schnell, aber sehr ungenau, da der Abstand zwischen der Einmesskugel und RT-Achse sich bei Temperaturänderungen verändert und nicht korrigiert wird.

Die Aufgabe der vorliegenden Erfindung besteht darin, eine Lösung für eines oder mehrere der oben bezeichneten Probleme zu finden. Insbesondere sollte ein vereinfachtes aber hinreichend genaues Verfahren zur Bestimmung der Lage der Drehtischachse angegeben werden.

Nach einer allgemeinen Idee der Erfindung wird ein Verfahren angegeben, das zur wiederholten Bestimmung der Lage einer Drehtischachse im Gerätekoordinatensystem eines Koordinatenmessgeräts auf einfache Art und Weise geeignet ist. Es wird ein KMG mit zwei daran angebrachten Antastkörpern verwendet, die jeweils einen durch Antasten bestimmbaren Referenzpunkt aufweisen, genannt "Antastkörper-Referenzpunkt". Mit Hilfe der Antastkörper-Referenzpunkte kann die Lage der Drehtischachse durch Antasten der Antastkörper ermittelt werden. Ein Antastkörper-Referenzpunkt befindet sich beispielsweise auf der X-Koordinate der Drehtischachse, oder in der Nähe der X-Koordinate. Ein zweiter Antastkörper-Referenzpunkt befindet sich beispielsweise auf der Y-Koordinate der Drehtischachse, oder in der Nähe der YKoordinate. Mit dem Verfahren ist es möglich, eine zeitliche Drift der Position der Drehtischachse festzustellen und vorzugsweise zu korrigieren, wenn erwünscht. Die Vorteile des Verfahrens sind nachfolgend noch angegeben.

Angegeben wird insbesondere ein Verfahren nach Anspruch 1. Vorteilhafte Ausgestaltungen sind in den Unteransprüchen angegeben.

Angegeben wird insbesondere ein Verfahren, das zur wiederholten Bestimmung der Lage einer Drehtischachse im Gerätekoordinatensystem eines Koordinatenmessgeräts geeignet ist, umfassend:
a) Antasten eines auf dem Drehtisch befindlichen Prüfkörpers in mehreren Drehtischstellungen mit einem Messsystem des KMG und Bestimmung der X-Koordinate und der Y-Koordinate der Drehtischachse im Gerätekoordinatensystem aus den Antastpunkten,
   wobei das Verfahren weiterhin umfasst:
b) Antasten eines ersten Antastkörpers, der neben dem Drehtisch angebracht ist und der einen relativ zur X-Koordinate der Drehtischachse ortsfest positionierten ersten Antastkörper-Referenzpunkt aufweist, mit dem Messsystem des KMG und Bestimmung der X-Koordinate des ersten Antastkörper-Referenzpunkts ,
c) Antasten eines zweiten Antastkörpers, der neben dem Drehtisch angebracht ist und der einen relativ zur Y-Koordinate der Drehtischachse ortsfest positionierten zweiten Antastkörper-Referenzpunkt aufweist, mit dem Messsystem des KMG und Bestimmung der Y-Koordinate des zweiten Antastkörper-Referenzpunkts,
d) Wiederholen der Schritte b) und c) an einem oder mehreren späteren Zeitpunkten und Bestimmen, insbesondere Berechnen, der X-Koordinate und der Y-Koordinate der Drehtischachse an dem späteren Zeitpunkt, oder an den späteren Zeitpunkten, aus der X-Koordinate des ersten Antastkörper-Referenzpunkts und der Y-Koordinate des zweiten Antastkörper-Referenzpunkts.

Sofern das Koordinatenmessgerät noch nicht mit den beiden Antastkörpern versehen ist, kann das Verfahren weiterhin umfassen:
- Das Anbringen des ersten Antastkörpers neben dem Drehtisch, wobei der erste Antastkörper einen ersten Antastkörper-Referenzpunkt aufweist und wobei der erste Antastkörper-Referenzpunkt relativ zur X-Koordinate der Drehtischachse ortsfest positioniert wird,
- Das Anbringen des zweiten Antastkörpers neben dem Drehtisch, wobei der zweite Antastkörper einen zweiten Antastkörper-Referenzpunkt aufweist und wobei der zweite Antastkörper-Referenzpunkt relativ zur Y-Koordinate der Drehtischachse ortsfest positioniert wird

Das Messsystem des KMG ist ein taktiles Messsystem, da damit angetastet wird. Ein taktiles Messystem ist an sich bekannt. Das Messsystem des KMG weist insbesondere einen Taster auf, wie von taktilen KMG allgemein bekannt. Der Taster kann ein Tastelement, beispielsweise eine Tastkugel, oder ein anders geformtes Tastelement, aufweisen. Ein Antasten erfolgt im Speziellen mit dem Taster, noch spezieller mit einem Tastelement des Tasters, wie von taktilen KMG allgemein bekannt.

Bei dem Verfahren können die aufgezählten Schritte a) - c) in beliebiger Reihenfolge durchgeführt werden. Beispielsweise können die Schritte b) und c) vor dem Schritt a) erfolgen. Vorzugsweise werden die Schritte a)-c) in kurzem zeitlichen Abstand voneinander durchgeführt, um das Messergebnis störende Einflüsse, wie z.B. Temperatureffekte, zu vermeiden.

Mit dem erfindungsgemäßen Verfahren wird ein genaues und schnelles Verfahren zur Bestimmung der räumlichen Lage einer Drehtischachse bereitgestellt, das universal für alle KMG mit Drehtisch einsetzbar ist. Das Einmessen der Drehtischachse kann einmalig erfolgen, beispielsweise anhand von Prüfkörpern, die sich auf dem Drehtisch selbst befinden, wie oben in Schritt a) angegeben. Spätere Bestimmungen der Lage der Drehtischachse erfolgen auf vereinfachte Weise anhand von Antastkörpern, die neben dem Drehtisch am KMG fixiert sind, beispielsweise auf einer Werkstückaufnahme oder einem Messtisch des KMG. Die Antastkörper können soweit vom Drehtisch entfernt positioniert werden, dass eine spätere Bestimmung der Lage der Drehtischachse auch möglich ist, wenn auf dem Drehtisch ein Werkstück aufgespannt ist. Dadurch wird die Bestimmung der Lage der Drehtischachse erheblich vereinfacht. Ein Werkstück muss dazu nicht vom Drehtisch entnommen werden und eine erneute Bestimmung der Lage des Werkstückkoordinatensystems nach Entfernung und Wiederauflegen des Werkstücks auf den Drehtisch ist nicht mehr erforderlich.

Mit dem erfindungsgemäßen Verfahren können Standardabläufe für die Lagebestimmung bzw. das Einmessen einer Drehtischachse geliefert werden, wobei jeweils nur eine Position eines Antastkörpers, im Koordinatensystem des KMG bestimmt werden muss. Der Anwender muss keine weitere Eingabe machen. Da beide Antastkörper jeweils mindestens in einer Koordinate, X oder Y, ortsfest zur Drehtischachse angeordnet sind, entsteht keine Ungenauigkeit bei der Driftkorrektur. Die Driftkorrektur ist sehr genau, da kein unkorrigierter Abstand vorhanden ist, wie bei der RT-Offsetkorrektur.

Das Antasten von den beiden Antastkörpern ist zudem deutlich schneller als die bisher bekannten Einmessverfahren für die Drehtischachse.

Bei dem erfindungsgemäßen Verfahren ist eine Ungenauigkeit aufgrund von CAA (Computer Aided Accuracy) -Restfehlern ausgeschlossen, da diese Restfehler beim erstmaligen Ermitteln der Positionen der Antastkörper-Referenzpunkte und bei der später erfolgenden, erneuten Bestimmung dieser Positionen identisch sind.

In dem erfindungsgemäßen Verfahren können auf einfache Weise konstante Bedingungen sichergestellt werden, da auf dem Drehtisch und am KMG keine Veränderungen vorgenommen werden müssen, um die X- und Y-Koordinaten der Drehtischachse zu einem oder mehreren späteren Zeitpunkten zu bestimmen. So ist es z.B. nicht erforderlich, ein Werkstück zur erneuten Vermessung der Drehtischachse vom Drehtisch zu entfernen, wie oben ausgeführt. Dadurch können Ungenauigkeiten bei der erneuten Vermessung der Drehtischachse, z.B. aufgrund von Temperaturänderungen bei Entfernung und Neupositionierung eines Werkstückes, ausgeschlossen werden. Das Verfahren ermöglicht somit auf einfache Weise die Bestimmung der Drehtischachse im laufenden Messbetrieb.

Schließlich ist das Verfahren auch auf einfache Art und Weise bei bestehenden Koordinatenmessgeräten bzw. deren Steuerungssoftware nachrüstbar.

Die Begriffe "relativ zur X-Koordinate der Drehtischachse ortsfest positioniert" und "relativ zur Y-Koordinate der Drehtischachse ortsfest positioniert" bedeuten, dass der entsprechende Referenzpunkt zumindest in der angegebenen Koordinate, X oder Y, ortsfest ist. In der jeweils nicht genannten anderen Koordinate kann der Referenzpunkt veränderlich sein, wie in speziellen Ausführungsformen der Erfindung angegeben. Der Begriff "ortsfest" kann also auf nur eine Koordinate, X oder Y, bezogen sein. Der Begriff "ortsfest" kann aber auch auf mehrere Koordinaten, wie X und Y, bezogen sein, was im speziellen Fall angegeben ist. Eine andere Ausdrucksweise für "relativ zur X-Koordinate der Drehtischachse ortsfest positioniert" ist, dass der erste Antastkörper-Referenzpunkt, bzw. dessen Position, relativ zur X-Koordinate der Drehtischachse unveränderlich ist. Dies bedeutet, dass der Abstand zwischen der Drehtischachse und dem ersten Antastkörper-Referenzpunkt in X-Richtung konstant, insbesondere zeitlich unveränderlich, ist. Eine andere Ausdrucksweise für "relativ zur Y-Koordinate der Drehtischachse ortsfest positioniert" ist, dass der zweite Antastkörper-Referenzpunkt, bzw. dessen Position, relativ zur Y-Koordinate der Drehtischachse unveränderlich ist. Das bedeutet, dass der Abstand zwischen der Drehtischachse und dem zweiten Antastkörper-Referenzpunkt in Y-Richtung konstant, insbesondere zeitlich unveränderlich, ist.

Nachfolgend werden einzelne Verfahrensschritte detaillierter beschrieben, bezogen auf die Ausführungsform mit den Schritten a)-d), wie oben angegeben.

Der Schritt a) des Verfahrens, das Antasten eines auf dem Drehtisch befindlichen Prüfkörpers in mehreren Drehtischstellungen, kann auf an sich bekannte Art und Weise erfolgen. Methoden zur Bestimmung der Lage einer Drehtischachse im Gerätekoordinatensystem eines KMG, die in Schritt a) des erfindungsgemäßen Verfahrens eingesetzt werden können, sind an sich bekannt und in verschiedenen Varianten beschrieben in WO02090879A2. Beispiele sind, ohne Beschränkung, die sogenannte 1-Kugel-Methode, die 2-Kugel-Methode, die Prüfzylinder-Methode und die selbstzentrierende Methode. Diese Methoden sind für verschiedene Anwendungsfälle besonders geeignet und weisen bestimmte Charakteristika auf. Eine detailliertere Beschreibung anhand von Zeichnungen ist im Beispielteil angegeben.

### 1-Kugel-Methode:

Es werden bei dieser Methode keine zusätzlichen Normale benötigt. Die Messung kann mit dem Referenztaster durchgeführt werden. Ein Referenztaster ist ein Taster, dessen Form genau bekannt ist, und bei dem vorzugsweise auch weitere Eigenschaften, wie z. B. Biegesteifigkeit eines Schaftes, genau bekannt sind. Speziell ist die Form eines Tastelements des Referenztasters genau bekannt, beispielsweise die genaue Form einer Tastkugel, die von einer idealen Kugelform abweichen kann. Alle Messungen werden in der gleichen Z-Höhe des KMGs durchgeführt. Rechtwinkligkeits-Restfehler des KMGs können bei Messungen in anderen Z-Höhen zu Messfehlern führen. Abhängig von der Position des Drehtischs im Messvolumen kann eventuell nicht der komplette Drehbereich abgedeckt werden. Die 1-Kugel-Methode ist bevorzugt bei nicht allzu hohen Genauigkeitsanforderungen. Sie ist bevorzugt für flache Werkstücke mit großem Durchmesser (z.B. Tellerräder). Die höchste Genauigkeit wird erzielt, wenn sich das Werkstück ungefähr auf derselben Messhöhe befindet wie zuvor die Kugel bei der Achsbestimmung.

### 2-Kugel-Methode:

Die RT-Achse wird über die gesamte Höhe des Werkstückes eingemessen. Rechtwinkligkeits-Restfehler des KMG werden so kompensiert und wirken sich weniger stark auf die Messunsicherheit aus. Die Messung kann mit einem Referenztaster durchgeführt werden. Eingesetzt wird entweder eine spezielle Vorrichtung, auf der beide Kugeln befestigt sind, oder das Basissystem wird bei jedem Ablauf manuell bestimmt. Abhängig von der Position des Drehtischs im Messvolumen kann evtl. nicht der komplette Drehbereich abgedeckt werden. Die 2-Kugel-Methode wird bevorzugt bei hohen Werkstücken eingesetzt.

### Prüfzylinder-Methode:

Die RT-Achse wird über die gesamte Höhe des Zylinders eingemessen. Rechtwinkligkeits-Restfehler des KMG werden so kompensiert und wirken sich weniger stark auf die Messunsicherheit aus. Die Messzeit ist kurz und die Vorrichtung einfach: Der Zylinder lässt sich jederzeit reproduzierbar auf dem Drehtisch befestigen. Auch die Prüfzylinder-Methode kann bei hohen Werkstücken eingesetzt werden. Insbesondere kann die Prüfzylinder-Methode für die Messung von Wellen mit geringer Formabweichung verwendet werden: Statt einen Prüfzylinder zu verwenden, wird dann vor jedem Messablauf die Drehtischachse direkt am Werkstück bestimmt.

### Selbstzentrierende Methode:

Es handelt sich dabei um eine sehr schnelle Methode. Die Messung kann mit einem Referenztaster durchgeführt werden. Alle Messungen werden in der gleichen Z-Höhe des KMG durchgeführt. Rechtwinkligkeits-Restfehler des KMG können bei Messungen in anderen Z-Höhen zu größeren Messfehlern führen. Abhängig von der Position des Drehtischs im Messvolumen kann nicht immer der komplette Drehbereich abgedeckt werden. Bei der selbstzentrierenden Methode kann das Element zum Einmessen der Drehtischachse direkt auf der Werkstückpalette befestigt werden. Es ist deshalb möglich, ohne großen Zeitaufwand vor jeder Werkstückmessung die Drehtischachse neu einzumessen.

Der in Schritt a) des Verfahrens verwendete Prüfkörper kann insbesondere eine Kugel sein, wie beispielsweise bei der oben angegebenen 1-Kugel-Methode oder 2-Kugel-Methode verwendet, oder ein Zylinder, wie bei der oben angegebenen Prüfzylinder-Methode verwendet, oder ein Element, das mit einem Taster selbstzentrierend angetastet werden kann, wie z.B. ein Kegel, eine kegelförmige Vertiefung, eine Bohrung oder ein Kugeltripel, ohne darauf beschränkt zu sein.

Bei dem erfindungsgemäßen Verfahren werden zumindest eine X-Koordinate und eine Y-Koordinate der Drehtischachse bestimmt. Die Drehtischachse kann parallel zur Z-Achse des Gerätekoordinatensystems stehen. In diesem Fall sind die X-Koordinate und die Y-Koordinate der Drehtischachse unveränderlich über ihre gesamte Länge. Die Drehtischachse kann aber stattdessen zur Z-Achse geneigt sein. In diesem Fall sind die X-Koordinate und die Y-Koordinate der Drehtischachse nicht kontant.

Das erfindungsgemäße Verfahren kann dann in einer bestimmten Z-Höhe des Gerätekoordinatensystems durchgeführt werden. Anders ausgedrückt kann die Bestimmung der X- und Y-Koordinaten der Drehtischachse und die Bestimmung der X- oder Y-Koordinate der Antastkörper bei einem kontanten Z-Wert, in einer zur X-Y-Ebene parallelen Messebene, durchgeführt werden. Der gewählte Z-Wert, bzw. der Abstand der zur X-Y-Ebene parallelen Messebene wird vorzugsweise auf die Form und Anbringungshöhe der Antastkörper abgestimmt. Werden beispielweise ringförmige Antastkörper gewählt, dann wird eine einzige durch den Ring verlaufende Ebene als Messebene gewählt, indem der Ring an der Innen- oder Außenseite angetastet wird. Es ist auch möglich, Antastkörper zu wählen, die in verschiedenen Z-Höhen angetastet werden können, und deren X- und/oder Y-Koordinate (bzw. die Koordinaten des Referenzpunktes des Körpers) in verschiedener Z-Höhe bestimmt werden kann. Ein Beispiel ist hierfür ein Hohlzylinder, der eine größere Ausdehnung in Z-Richtung aufweist als ein Ring. Bei dieser Variante ist es möglich, in Schritt a) des Verfahrens die X- und Y-Koordinaten der Drehtischachse in verschiedenen Z-Höhen zu messen, beispielsweise über die gesamte Z-Höhe eines Werkstückes mit der 2-Kugel-Methode, und in jeweils gleicher Z-Höhe die X- und/oder Y-Koordinate der Referenzpunkte der Antastkörper zu bestimmen.

Der erste Antastkörper und der zweite Antastkörper sind neben dem Drehtisch positioniert. D.h. die Antastkörper drehen sich nicht mit dem Drehtisch mit. Die Antastkörper sind relativ zu zumindest der X- oder der Y-Koordinate der Drehtischachse fixiert.

Der erste Antastkörperreferenzpunkt ist zumindest bezüglich seiner X-Koordinate relativ unveränderlich zur X-Koordinate der Drehtischachse. Entweder sind die X-Koordinaten von Drehtischachse und erstem Antastkörperreferenzpunkt gleich, oder sie weisen einen unveränderlichen Abstand (Offset) ΔX auf. In Y-Richtung des Gerätekoordinatensystems kann der erste Antastkörper verschiebbar sein, oder er wird in Y Richtung ebenfalls fixiert. Eine Verschiebung des ersten Antastkörpers in Y-Richtung, und damit eine Verschiebung des ersten Antastkörper-referenzpunkts, kann vorgesehen sein, weil so die Positionierung des ersten Antastkörpers an die Größe bzw. den Platzbedarf eines Werkstückes angepasst werden kann. Vorzugsweise ist durch entsprechende Anbringung des ersten Antastkörpers der erste Antastkörperreferenzpunkt auch bezüglich seiner Y-Koordinate relativ unveränderlich zur Y-Koordinate der Drehtischachse.

Der zweite Antastkörperreferenzpunkt ist zumindest bezüglich seiner Y-Koordinate relativ unveränderlich zur Y-Koordinate der Drehtischachse. Entweder sind die Y-Koordinaten von Drehtischachse und zweitem Antastkörperreferenzpunkt gleich oder sie weisen einen unveränderlichen Abstand (Offset) ΔY auf. In X-Richtung des Gerätekoordinatensystems kann der zweite Antastkörper verschiebbar sein, oder er wird in X Richtung ebenfalls fixiert. Eine Verschiebung des zweiten Antastkörpers in X Richtung, und damit eine Verschiebung des zweiten Antastkörperreferenzpunkts, kann vorgesehen sein, weil so die Positionierung des zweiten Antastkörpers an die Größe bzw. den Platzbedarf eines Werkstückes angepasst werden kann. Vorzugsweise ist durch entsprechende Anbringung des zweiten Antastkörpers der zweite Antastkörperreferenzpunkt auch bezüglich seiner X-Koordinate relativ unveränderlich zur X-Koordinate der Drehtischachse.

Wie oben ausgeführt, ist es ist in dem Verfahren nicht unbedingt erforderlich, dass die X-Koordinate des Referenzpunkts des ersten Antastkörpers mit der X-Koordinate der Drehtischachse im Gerätekoordinatensystem identisch ist. Ebenso ist es nicht erforderlich, dass die Y-Koordinate des Referenzpunkts zweiten Antastkörpers identisch ist mit der Y-Koordinate der Drehtischachse, die im Schritt a) ermittelt wurde. Es wird jedoch angestrebt, dass ein Unterschied zwischen den X-Koordinaten ΔX und ein Unterschied zwischen den Y-Koordinaten ΔY möglichst gering ist, damit Fehler durch Änderung von ΔX oder ΔY möglichst gering gehalten werden. Änderung in ΔX und ΔY können beispielsweise durch thermische Ausdehnung entstehen. Bevorzugte Werte von ΔX und ΔY sind 0 bis 3 mm, vorzugsweise 0 bis 2 mm und am meisten bevorzugt 0 bis 1 mm.

Die Befestigung der Antastkörper kann vorzugsweise direkt oder indirekt auf/an der Gerätebasis erfolgen. Die Begriffe Gerätebasis, Messtisch und Basisplatte, sofern in dieser Beschreibung verwendet, bezeichnen denselben Gegenstand. Eine Basisplatte kann beispielsweise, und ohne Beschränkung, aus Stein sein. Die Art der Befestigung ist an sich nicht beschränkt, sie kann beispielsweise formschlüssig, kraftschlüssig oder stoffschlüssig sein. Als Befestigungsmittel können beispielsweise Kleber oder Verbindungselemente verwendet werden, wie beispielsweise Rast-oder Steckverbindungen. Wenn die Antastkörper in X- oder Y-Richtung verschiebbar am KMG angeordnet sind, dann kann die Befestigung in einer in X- oder Y-Richtung ausgerichteten Schiene erfolgen, worin die Antastkörper verschiebbar sind. Vorzugsweise ist dann eine Einrichtung vorgesehen, womit die Antastkörper in der Schiene arretiert werden können, um ein ungewolltes Verschieben zu vermeiden.

Eine indirekte Befestigung der Antastkörper kann beispielsweise dadurch erfolgen, dass Träger auf der Gerätebasis befestigt werden und jeder Antastkörper auf einem Träger befestigt wird.

Die Träger können möglichst nahe neben dem Drehtisch an der Gerätebasis befestigt werden, sodass sie vorzugsweise in X- und Y-Richtung ortsfest sind. Die Art der Befestigung ist an sich nicht beschränkt, sie kann beispielsweise formschlüssig, kraftschlüssig oder stoffschlüssig sein. Als Befestigungsmittel können beispielsweise Kleber oder Verbindungselemente verwendet werden, wie beispielsweise Schrauben, Rast-oder Steckverbindungen. Für eine Befestigung mit einer oder mehreren Schrauben können Gewindeöffnungen verwendet werden, die bereits an der Gerätebasis vorgesehen sind.

Die Die Art der Befestigung eines Antastkörpers auf einem Träger ist nicht beschränkt. Sie kann beispielsweise formschlüssig, kraftschlüssig oder stoffschlüssig sein, wobei die oben aufgezählten Befestigungsmittel verwendet werden können.

Der Träger kann eine beliebige, den Gegebenheiten des KMG angepasste Form aufweisen. Ein Beispiel ist, ohne Beschränkung, eine Trägerplatte. Der Träger, beispielsweise eine Trägerplatte, kann eine Führung aufweisen, insbesondere eine lineare Führung, die beim Befestigen des Trägers vorzugsweise parallel oder im Wesentlichen parallel zur X- oder Y-Achse des Gerätekoordinatensystems ausgerichtet wird. Beim Anbringen eines Antastkörpers kann der Antastkörper in die Führung eingeführt werden und an die gewünschte X- oder Y-Position verschoben werden. An der gewünschten Position kann der Antastkörper befestigt werden, sodass er auf der Gerätebasis und dem Träger in X- und Y-Richtung ortsfest ist.

Insbesondere wird mit der Erfindung ein Verfahren angegeben, bei dem
- ein Unterschied ΔX zwischen der X-Koordinate des ersten Antastkörper-Referenzpunkts und der in Schritt a) ermittelten X-Koordinate der Drehtischachse in dem KMG abgespeichert wird,
- ein Unterschied ΔY zwischen der Y-Koordinate des zweiten Antastkörper-Referenzpunkts und der in Schritt a) ermittelten Y-Koordinate der Drehtischachse in dem KMG abgespeichert wird und
- ΔX und ΔY zur Bestimmung, insbesondere Berechnung, der X-Koordinate und der Y-Koordinate der Drehtischachse bei der wiederholten Lagebestimmung der Drehtischachse herangezogen werden.

Die Werte ΔX und ΔY werden auch als X-Offset oder Y-Offset bezeichnet. Im Spezialfall können ΔX und/oder ΔY Null sein, sodass kein Offset besteht. Da der erste Antastkörper bezüglich der X-Koordinate seines ersten Referenzpunkts ortsfest zur X-Koordinate der Drehtischachse ist, ist ΔX konstant und kann zu einem späteren Zeitpunkt zur Bestimmung der X-Koordinate der Drehtischachse herangezogen werden. Entsprechendes gilt für ΔY und den zweiten Antastkörperreferenzpunkt. Die Werte ΔX und ΔY können in den Messrechner eingegeben werden und von einer speziell angepassten Messsoftware bearbeitet werden.

Die Art des ersten und des zweiten Antastkörpers ist nicht besonders beschränkt, solange an oder in dem Antastkörper ein zeitlich und relativ zum Körper unveränderlicher Referenzpunkt definiert werden kann, welcher reproduzierbar mit dem Messsystem des KMG erfasst werden kann. Insbesondere, und ohne Beschränkung darauf, sind die Antastkörper ausgewählt aus einem Ring, einer Scheibe, einem Zylinder, einem Hohlzylinder, einer Kugel, einem Endmaß, einem Innenkegel, und einem Kugeltripel für selbstzentrierende Antastungen, oder einer Kombination davon. Ein Beispiel eines Rings ist ein Lehrring, der eine sehr geringe Rundheitsabweichung aufweist, aber einen beliebigen Durchmesser aufweisen kann. Bei einem Ring, einer Scheibe, einem Zylinder, einem Hohlzylinder oder einer Kugel kann an mehreren Punkten mit dem Messsystem des KMG angetastet werden und daraus der Mittelpunkt des Rings, der Scheibe des Zylinders oder der Kugel bestimmt werden. Insbesondere beim Antasten durch Scannen erhält man eine sehr gute Reproduzierbarkeit der Koordinate des Referenzpunkts, beispielsweise des Ring- oder Kugelmittelpunkts. Bei einem rotationssymmetrischen Antastkörper ist es bevorzugt, einen Kreisscann durchzuführen, vorzugsweise in konstanter Z-Höhe. Scannen bedeutet erfindungsgemäß das stetige, ununterbrochene Antasten einer Kontur mit laufender (dynamischer) Messwertübernahme, wodurch eine dichte Punktefolge entsteht. Durch das Scannen von vielen Punkten werden Ungenauigkeiten aufgrund der Antastreproduzierbarkeit minimiert oder ausgeschlossen.

Bei Verwendung eines Endmaßes eines Antastkörpers reicht eine Antastung aus, um den zugeordneten Referenzpunkt zu bestimmen. Der Vorteil ist das Einsparen von Messzeit.

In einer Ausführungsform des erfindungsgemäßen Verfahrens erfolgt das Antasten im Schritt a) b) und c) mit einem Referenztaster. Ein Referenztaster ist ein Taster, dessen Form genau bekannt ist, und bei dem vorzugsweise auch weitere Eigenschaften, wie z. B. Biegesteifigkeit eines Schaftes, genau bekannt sind. Speziell ist die Form eines Tastelements des Referenztasters genau bekannt, beispielsweise die genaue Form einer Tastkugel, die von einer idealen Kugelform abweichen kann. Dadurch können Ungenauigkeiten wegen ungenauer Tasterdaten minimiert oder ausgeschlossen werden. Auch bei Schritt d) kann ein Referenztaster eingesetzt werden, was bevorzugt ist. In Schritt d) kann stattdessen ein Messtaster eingesetzt werden, der auch im laufenden Messbetrieb eingesetzt wird und dessen Form in der Regel weniger genau bekannt ist als bei einem Referenztaster. Die Verwendung eines Messtasters kann dann sinnvoll sein, wenn keine höchste Genauigkeit gefordert wird aber dafür kürzere Messzeit und wenn dadurch ein Tasterwechsel eingespart werden kann.

In einem weiteren Aspekt betrifft die Erfindung ein Koordinatenmessgerät, aufweisend eine Anordnung aus
- einem Drehtisch, auf dem ein Prüfkörper positionierbar ist,
- einem Messsystem zum Antasten des Prüfkörpers,
- einem neben dem Drehtisch angebrachten ersten Antastkörper mit einem ersten Antastkörper-Referenzpunkt, der relativ zur X-Koordinate der Drehtischachse ortsfest positioniert ist,
   wobei der erste Antastkörper-Referenzpunkt so zur X-Koordinate der Drehtischachse positioniert ist, dass der Unterschied ΔX zwischen der X-Koordinate des ersten Antastkörper-Referenzpunkts und der X-Koordinate der Drehtischachse 0 bis 3 mm beträgt,
- einem neben dem Drehtisch angebrachten zweiten Antastkörper mit einem zweiten Antastkörper-Referenzpunkt, der relativ zur Y-Koordinate der Drehtischachse ortsfest positioniert ist,
wobei der zweite Antastkörper Referenzpunkt so zur Y-Koordinate der Drehtischachse positioniert ist, dass der Unterschied ΔY zwischen der Y-Koordinate des zweiten Antastkörper-Referenzpunkts und der Y-Koordinaten der Drehtischachse 0 bis 3 mm beträgt,
wobei der erste Antastkörper-Referenzpunkt und der zweite Antastkörper-Referenzpunkt jeweils reproduzierbar mit dem Messsystem des KMG erfasst werden kann.

Insbesondere ist das Koordinatenmessgerät zur Durchführung des vorangehend beschriebenen Verfahrens eingerichtet.

Insbesondere weist das Koordinatenmessgerät einen Messrechner und eine Messsoftware auf, die zur Durchführung des vorangehend beschriebenen, erfindungsgemäßen Verfahrens eingerichtet sind. Insbesondere sind der Messrechner und die Messsoftware eingerichtet zur Durchführung des eingangs beschriebenen Verfahrens.

Insbesondere weist das Koordinatenmessgerät eine Steuerung auf, die zur Durchführung des erfindungsgemäßen Verfahrens eingerichtet ist.

Die für das Verfahren verwendeten Koordinaten der Antastkörper-Referenzpunkte können beispielsweise in der Steuerung oder in dem Messrechner hinterlegt werden oder hinterlegt sein, beispielsweise in Form einer Datei, sodass die Steuerung und/oder der Messrechner diese Informationen aufweist.

Es ist in einer speziellen Ausführungsform auch möglich, einen Unterschied ΔX zwischen der X-Koordinate des ersten Antastkörper-Referenzpunkts und der zuvor ermittelten X-Koordinate der Drehtischachse, und einen Unterschied ΔY zwischen der Y-Koordinate des zweiten Antastkörper-Referenzpunkts und der der zuvor ermittelten Y-Koordinate der Drehtischachse in der Steuerung oder in dem Messrechner zu hinterlegen, sodass die Steuerung und/oder der Messrechner diese Informationen aufweist. Die Steuerung und/oder der Messrechner können insbesondere gespeicherte Werte ΔX und ΔY zur Bestimmung der X-Koordinate und der Y-Koordinate der Drehtischachse, heranziehen.

In einer weiteren Ausführungsform ist die Steuerung ausgestaltet, einen Betrieb des Koordinatenmessgeräts so zu steuern, dass das Koordinatenmessgerät den ersten Antastkörper und den zweiten Antastkörper antastet und vorzugsweise daraus erhaltene Antastinformationen, wie Koordinaten von Antastkörper-Referenzpunkten, auszuwerten.

Generell gilt, dass statt einer Hinterlegung von Informationen im KMG, z.B. in einem entsprechenden digitalen Datenformat in einem Datenspeicher, auf den die Steuerung des KMG Zugriff hat, auch eine Hinterlegung in einem vom KMG separaten Speicher möglich ist, wobei das KMG dann für dessen Betrieb vorzugsweise Zugriff auf den Speicher hat.

Die Erfindung betrifft auch die Verwendung eines Koordinatenmessgeräts, insbesondere des vorangehend beschriebenen Koordinatenmessgeräts, zur Durchführung des vorangehend beschriebenen Verfahrens.

In einer speziellen Ausführungsform des erfindungsgemäßen Koordinatenmessgeräts ist der erste Antastkörper in Y-Richtung variabel positionierbar und/oder der zweite Antastkörper ist in X-Richtung variabel positionierbar. Die Vorteile dieser Ausführungsform wurden bereits bei dem Verfahren erläutert.

Ferner gehört zum Umfang der Erfindung ein Computerprogramm, das zumindest die Schritte b), c) und d), optional auch a), des oben beschriebenen Verfahrens durchführt und/oder steuert. Insbesondere weist das Computerprogramm Programmcode-Mittel auf, die auf einem computerlesbaren Datenträger gespeichert sein können. Das Computerprogramm kann in dem KMG oder in einem vom KMG separaten Speicher hinterlegt sein. Beispielsweise kann das Computerprogramm in einem Datenspeicher hinterlegt sein, auf den die Steuerung des KMG Zugriff hat, oder in einem Datenspeicher, der Teil der Steuerung ist, oder in einem Datenspeicher, der Teil des Messrechners ist.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes zumindest die Schritte b), c) und d), optional auch a), des oben beschriebenen Verfahrens durchführt.

Die Erfindung wird nachfolgend anhand spezieller Ausführungsbeispiele beschrieben. Es zeigen:
- Fig. 1: die Lage einer Drehtischachse und eines Werkstücks in einem Gerätekoordinatensystem,
- Fig. 2: das Einmessen einer Drehtischachse mit der 1-Kugel-Methode,
- Fig. 3: das Einmessen einer Drehtischachse mit der Prüfzylinder-Methode,
- Fig. 4: die Positionierung zweier Antastelemente relativ zur Drehtischachse, und
- Fig. 5: ein Durchführungsschema des erfindungsgemäßen Verfahrens.

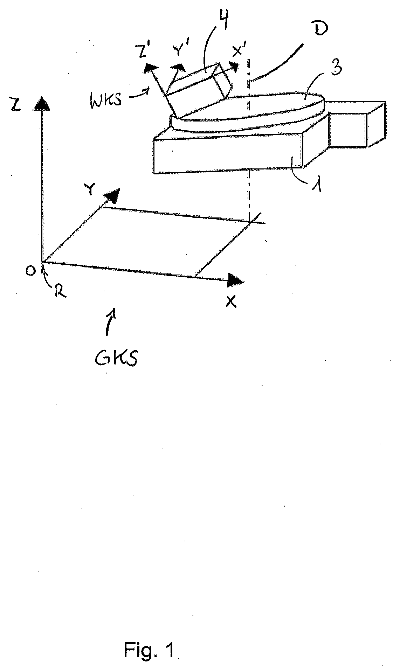

Die Fig. 1 zeigt ein Gerätekoordinatensystem GKS mit den Achsen X, Y und Z und dem Ursprung bzw. Referenzpunkt R im Nullpunkt des Gerätekoordinatensystems. Die Achsen des Gerätekoordinatensystems GKS werden auch als KMG-Achsen bezeichnet. Auf einem Messtisch 1 aus Hartgestein ist ein Drehtisch 2 aufgebracht, der um die Drehtischachse D relativ zur Platte 1 rotierbar ist. Die Drehtischachse definiert die genaue Position des Drehtisches bezüglich des Geräte-Nullpunkts (Referenzpunktes) R sowie die Verkippung bezüglich der Achsen des Gerätekoordinatensystems GKS, also die Lage im GKS. Der Drehtisch 3 trägt das Werkstück 4 mit dem zugehörigen Werkstückkoordinatensystem WKS, das durch die Koordinatenachsen X', Y' und Z' definiert ist. Die Antastpunkte, die im erfindungsgemäßen Verfahren ermittelt werden, beziehen sich auf das Gerätekoordinatensystem GKS, welches parallel zu den Verfahrachsen des KMG liegt.

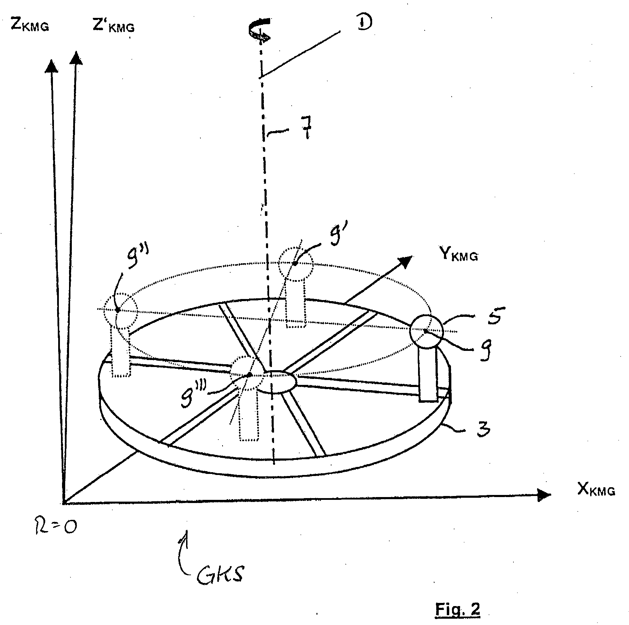

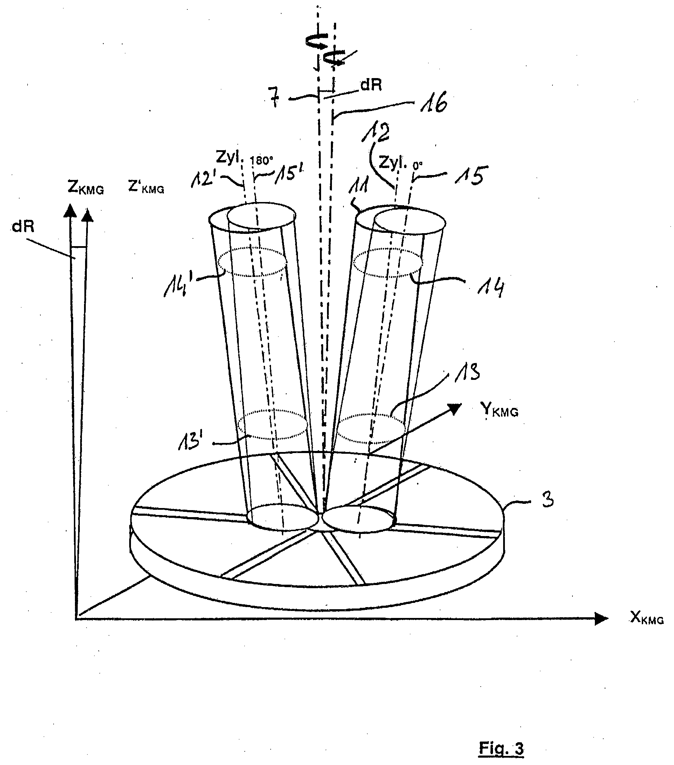

Alle Messelemente, Prüfmerkmale und Koordinatensysteme werden bei der Drehung des Drehtisches rechnerisch um die Drehtischachse D gedreht. Fehler beim Einmessen der Drehtischachse D wirken sich unmittelbar auf die Messgenauigkeit aus. In den nachfolgenden Fig. 2 und 3 sind Methoden zum Einmessen der Drehtischachse D vorgestellt, die beispielhaft in Schritt a) des erfindungsgemäßen Verfahrens Anwendung finden können.

In der Fig. 2 ist die 1-Kugel-Methode zum Einmessen der Drehtischachse D beschrieben. Die Achsen des Gerätekoordinatensystems GKS sind bezeichnet mit X_{KMG}, Y_{KMG} und Z_{KMG}. Zur Bestimmung der Drehachse einer bezüglich der Basis drehbaren Werkstückhalterung, das heisst bei einem Koordinatenmessgerät mit sogenanntem Drehtisch, sieht die Norm VDI/VDE 2617 Blatt 4 bei dem sogenannten "3D-α Test" zur Einmessung der Drehachse im Koordinatensystem der Basis ein Verfahren vor. Auf einem Drehtisch 3 wird eine Kugel 5 außerhalb einer Drehachse 7 des Drehtischs dicht über der Drehtischoberfläche fest montiert. Die Oberfläche der Kugel wird mit der Tastspitze des Koordinatenmessgeräts abgetastet, um hieraus den Mittelpunkt 9 der Kugel zu bestimmen. Die Bestimmung des Kugelmittelpunkts wird in wenigstens drei verschiedenen Drehstellungen des Drehtischs bezüglich der Drehachse wiederholt. Mit den so gewonnenen Kugelmittelpunkten 9, 9', 9", 9"' werden eine Ebene und ein Kreismittelpunkt bestimmt. Das Lot im Kreismittelpunkt auf die Ebene ist dann die Drehachse des Drehtischs im Koordinatensystem (X_{KMG}, Y_{KMG}, Z_{KMG}) des Koordinatenmessgeräts. Selbst dann, wenn eine zu den Richtungen X_{KMG} und Y_{KMG} orientierte Verschiebeachse Z'_{KMG} des Koordinatenmessgeräts nicht exakt orthogonal zu den Richtungen X_{KMG} und Y_{KMG} steht, eine sogenannte Rechtwinkligkeitsabweichung bzw. Rechtwinkligkeitsfehler, vorliegt, ergibt dieses Verfahren die korrekte Orientierung der Drehtischachse im rechtwinkligen Koordinatensystem des Koordinatenmessgeräts, das heißt die eingemessene Drehtischachse stimmt mit der mechanischen Rotationsachse des Drehtischs überein.

Werden nachfolgend allerdings beispielsweise Werkstücke vermessen, die sich in z-Richtung von der Drehtischoberfläche weg erstrecken, so ergeben sich aufgrund einer Rechtwinkligkeitsabweichung zwischen den Richtungen Z'_{KMG} und Y_{KMG} bzw. X_{KMG} mit zunehmendem Abstand von der aus den Kugelmittelpunkten 9, 9', 9", 9"' bestimmten Ebene Messfehler. In einem solchen Fall wird die Drehtischachse mit dem nachfolgend anhand der Figur 3 erläuterten Verfahren bestimmt:

Es wird auf dem Drehtisch 3 mit mechanischer Rotationsachse 7 ein zylindrischer Prüfkörper 11 fest angebracht, wobei dessen Zylinderachse mit 12 bezeichnet ist. In einer Ebene nahe der Drehtischoberfläche wird ein Umfang 13 des Zylinders abgetastet, und in einer von der Drehtischoberfläche weiter entfernten Ebene wird ein weiterer Umfang 14 des Zylinders abgetastet. Aus den beiden Umfängen bzw. Querschnitten 13, 14 wird die Zylinderachse ermittelt. Da allerdings die Verschiebeachse Z'_{KMG} des Koordinatenmessgeräts um einen Winkel dR von der zu den Richtungen X_{KMG} und Y_{KMG} orthogonalen Richtung Z_{KMG} abweicht, fällt die berechnete Zylinderachse 15 nicht mit dessen mechanischer Zylinderachse 12 zusammen. Es wird nun der Drehtisch um 180° verdreht, und in der neuen Drehstellung wird ein unterer Querschnitt 13' und ein oberer Querschnitt 14' vermessen. Es ergibt sich hieraus eine in dieser Drehstellung ermittelte Zylinderachse 15'. Es wird sodann eine Drehtischachse 16 berechnet, welche die Symmetrieachse zu den in den beiden Drehstellungen ermittelten Zylinderachsen 15 und 15' bildet. Die so berechnete Drehtischachse 16 weicht ebenfalls um den Winkel dR von der mechanischen Rotationsachse 7 des Drehtischs ab. Allerdings werden bei der so ermittelten Drehtischachse Messfehler, die aufgrund der Rechtwinkligkeitsabweichung dR erzeugt werden, bei der Antastung von zylindrischen Werkstücken, die sich in z-Richtung erstrecken, unterdrückt. Dieses Verfahren setzt hohe Anforderungen an die Präzision des zylindrischen Prüfkörpers 11. Die Bestimmung der Zylinderachse 15 ist limitiert durch die Präzision, mit der die Querschnitte 13, 14 ausgemessen werden. Diese Präzision kann bei diesem Verfahren limitiert sein durch eine Rechtwinkligkeitsabweichung zwischen den Achsen X_{KMG} und Y_{KMG} sowie Längenmessabweichungen in den Richtungen X_{KMG} und Y_{KMG}.

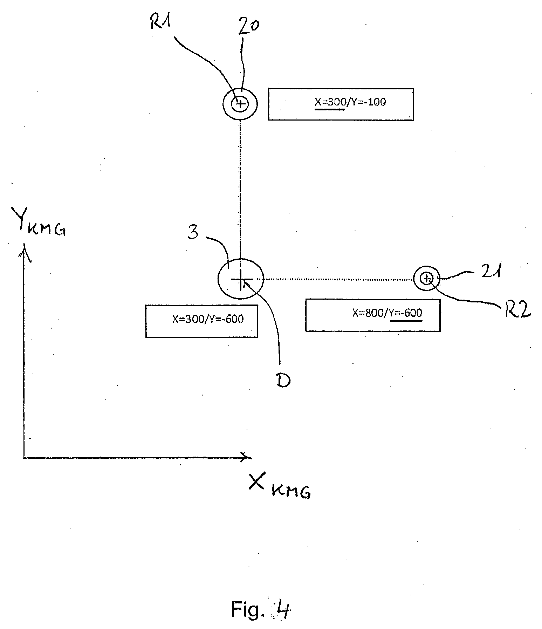

Eine weitere Methode zur Bestimmung der Lage einer Drehachse in einem Gerätekoordinatensystem wird in WO02090879A2 vorgestellt. Es wird ein Testobjekt eingesetzt, welches wenigstens zwei Testkörper umfasst, die eine solche Oberfläche aufweisen, dass durch Antasten der Oberfläche mit der Tastspitze Koordinaten von wenigstens einem bezüglich der Oberfläche des Testkörpers fest bzw. reproduzierbar angeordneten Bezugspunkt des Testkörpers im Koordinatensystem der Basis (d.h. dem Gerätekoordinatensystem) bestimmbar sind. Ein möglicher Testkörper ist eine präzise gefertigte Kugel oder ein Quader. Im Fall einer Kugel stellt die Methode der WO02090879A2 eine 2-Kugelmethode dar, die im allgemeinen Teil der Beschreibung genannt ist. Es ist auch möglich, einen selbstzentrierenden Antastkörper, wie etwa ein Kugeltripel oder einen Konus einzusetzen. Wird beispielsweise eine Kugel als Testkörper eingesetzt, so kann durch Antasten der Kugeloberfläche dann eindeutig der Kugelmittelpunkt im Koordinatensystem der Basis bestimmt werden. Die beiden Testkörper werden derart an der Werkstückhalterung bzw. auf dem Drehtisch angebracht, dass sie in Richtung der Drehachse einen Abstand voneinander aufweisen. Eine noch detailliertere Beschreibung der Methode ist angegeben in WO02090879A2, Seite 5 bis einschließlich Seite 10 und in den Patenansprüchen der WO02090879A2. Die Methode ist in den Figuren 4-10 der WO02090879A2 und der zugehörigen Figurenbeschreibung auf S. 12 bis einschließlich Seite 25 beschrieben. Auf die genannte Offenbarung der WO02090879A2 wird zur Erläuterung der vorliegenden Erfindung ausdrücklich Bezug genommen.

Die weiteren Schritte des erfindungsgemäßen Verfahrens sind anhand der Fig. 4 erläutert. Der Blick des Betrachters fällt in Z-Richtung auf die X/Y-Ebene des Gerätekoordinatensystems, sodass die Z-Achse des Gerätekoordinätensystems senkrecht zur Zeichnungsebene steht. Der Blick des Betrachters fällt beispielsweise auf einen Messtisch des KMG, auf dem ein Drehtisch 3 positioniert ist. Neben dem Drehtisch 3 mit der Drehtischachse D sind ein erster Antastkörper 20 und ein zweiter Antastkörper 21 angebracht. In diesem speziellen Fall sind die Antastkörper 20, 21 Lehrringe. Die Größe des Drehtisches 3 und die Größe der Lehrringe 20, 21 sind nicht maßstäblich gezeichnet. Im realen Fall wäre der Drehtisch 3 gegenüber den Lehrringen 20, 21 größer. Auch die Lage von Drehtisch 3 und den Antastkörpern 20, 21 in dem eingezeichneten Gerätekoordinatensystem ist nicht maßstäblich. Die Antastkörper 20, 21 können beispielsweise auf dem Messtisch des KMG befestigt sein. Der erste Lehrring 20 hat den Ringmittelpunkt R1 als ersten Antastkörper-Referenzpunkt. Der zweite Lehrring 21 weist den Ringmittelpunkt R2 als zweiten Antastkörper-Referenzpunkt auf. Im vorliegenden Beispiel hat das KMG einen Messbereich von X = 850 und von Y = 1000. Die Drehtischachse D ist an den Koordinaten X = 300 und Y = -600 positioniert. Der Referenzpunkt R1 des Lehrrings 20 ist bei X = 300 und Y = -100 positioniert. D.h. die X-Koordinate von R1 ist identisch mit der X-Koordinate von D. Beide X-Koordinaten können aber auch eine Abweichung (Offset) ΔX aufweisen. Entscheidend ist, dass die X-Koordinate von R1 relativ zur X-Koordinate von D nicht veränderlich ist. Die bei Y = - 100 befindliche Y-Koordinate von R1 kann veränderlich sein, beispielsweise durch Verschiebbarkeit des Lehrrings 20 in Richtung der Achse Y_{KMG}. Der Referenzpunkt R2 des Lehrrings 21 ist an den Koordinaten X = 800 / Y = -600 positioniert, d.h. R2 hat die Y-Koordinate mit der Drehtischachse D gemeinsam. Die Y-Koordinaten müssen nicht identisch sein, aber sie sind relativ zueinander nicht veränderlich. Die X-Koordinate von R2 kann veränderlich sein, beispielsweise durch Verschiebbarkeit des Lehrrings 21 in Richtung der Achse X_{KMG}. Die Lehrringe 20, 21 können mit einer Positionierungsvorrichtung, z.B. einer Schablone, so neben dem Drehtisch 3 angebracht werden, dass bei dem Lehrring 20 die X-Koordinate von R1 und bei dem Lehrring 21 die Y-Koordinate von R2 in etwa oder exakt mit den entsprechenden Koordinaten von der Drehtischachse D übereinstimmt, je nach Genauigkeit der Positionierungsvorrichtung. Die genaue Verortung der Koordinaten von R1 und R2 folgt anschließend durch Antasten der Lehrringe 20, 21 auf der Außenseite oder auf der Innenseite, je nach Art der Lehrringe, mit dem Messsystem des KMG, genauer gesagt mit einem Taster, vorzugsweise im Scanning-Modus. Die Lage der Drehtischachse D im Gerätekoordinatensystem wird mit dem Messsystem des KMG einmalig nach einem bekannten Verfahren bestimmt, z.B. eines wie anhand der Fig. 2 oder 3 erläutert. Danach sind die relativen Positionen von D, R1 und R2 bekannt. Die Koordinaten von D, R1 und R2 können in den Messrechner bzw. die Messsoftware automatisch oder manuell eingegeben werden. Für spätere Bestimmungen der Lage der Drehtischachse D im Gerätekoordinatensystem müssen lediglich die Lehrringe 20 und 21 angetastet und die Koordinaten von R1 und R2 neu bestimmt werden. Daraus lässt sich zu jedem späteren Zeitpunkt auf einfache Weise die Lage der Drehtischachse D im Gerätekoordinatensystem errechnen. Wie oben gesagt, fällt der Blick des Betrachters beispielsweise von oben auf einen Messtisch oder eine Basis des KMG. Die Achsen X und Y sind nur schematisch dargestellt. Die Z-Achse verläuft in Blickrichtung.

An sich bekannte weitere bauliche Teile eines KMG sind in Fig. 4 nicht näher dargestellt. Das KMG kann beispielsweise ein KMG in Brückenbauart sein, wie in US20110000277 in der dortigen Fig. 1 beispielhaft dargestellt und in baulichen Details beschrieben. Ebenfalls nicht dargestellt sind eine Steuerung und ein Messrechner, die Teil eines KMG sind und auf bekannte Art und Weise in das KMG integriert sind.

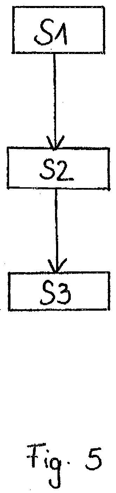

In der Fig. 5 ist ein Durchführungsschema des erfindungsgemäßen Verfahrens in seinen Einzelschritten dargestellt. In Schritt S1 erfolgt das Antasten eines auf dem Drehtisch 3 befindlichen Prüfkörpers 9 in mehreren Drehtischstellungen mit dem Messsystem des KMG und die Bestimmung der X-Koordinate und der Y-Koordinate der Drehtischachse D im Gerätekoordinatensystem (X_{KMG}, Y_{KMG}, Z_{KMG}, Z'_{KMG}) aus den Antastpunkten. Dieser Schritt wurde bereits anhand der Fig. 2 am Beispiel der 1-Kugel-Methode erläutert. Das Antasten kann beispielsweise mit einem an sich bekannten Tastelement erfolgen, beispielsweise einer Tastkugel.

Die weiteren Schritte S2 und S3 erfolgen unter Verwendung von Antastkörpern 20 und 21, die in der Fig. 4 bereits erläutert wurden. In Schritt S2 erfolgt ein Antasten des ersten Antastkörpers 20, der neben dem Drehtisch 3 angebracht ist und der den relativ zur X-Koordinate der Drehtischachse D ortsfest positionierten ersten Antastkörper-Referenzpunkt R1 aufweist, mit dem Messsystem des KMG und die Bestimmung der X-Koordinate des ersten Antastkörper-Referenzpunkts R1. Das Antasten kann beispielsweise mit einem an sich bekannten Tastelement erfolgen. In Schritt S2 erfolgt ein Antasten des zweiten Antastkörpers 21, der neben dem Drehtisch 3 angebracht ist und der den relativ zur Y-Koordinate der Drehtischachse D ortsfest positionierten zweiten Antastkörper-Referenzpunkt R2 aufweist, mit dem Messsystem des KMG und die Bestimmung der Y-Koordinate des zweiten Antastkörper-Referenzpunkts R2. Die zeitliche Reihenfolge der Schritte S1, S2 und S3 ist prinzipiell beliebig, wobei Schritt S1 nur einmalig durchgeführt werden muss. Die Schritte S2 und S3 können beliebig zu späteren Zeitpunkten wiederholt werden.

## Patentansprüche

1. Verfahren zur Bestimmung der Lage einer Drehtischachse (D) im Gerätekoordinatensystem eines Koordinatenmessgeräts KMG, umfassen:
a) Antasten eines auf dem Drehtisch (3) befindlichen Prüfkörpers (9) in mehreren Drehtischstellungen mit einem Messsystem des KMG und Bestimmung der X-Koordinate und der Y-Koordinate der Drehtischachse (D) im Gerätekoordinatensystem (X_{KMG}, Y_{KMG}, Z_{KMG}, Z'_{KMG}) aus den Antastpunkten,
**dadurch gekennzeichnet, dass** das Verfahren weiterhin umfasst:
b) Antasten eines ersten Antastkörpers (20), der neben dem Drehtisch (3) angebracht ist und der einen relativ zur X-Koordinate der Drehtischachse (D) ortsfest positionierten ersten Antastkörper-Referenzpunkt (R1) aufweist, mit dem Messsystem des KMG und Bestimmung der X-Koordinate des ersten Antastkörper-Referenzpunkts (R1),
c) Antasten eines zweiten Antastkörpers (21), der neben dem Drehtisch (3) angebracht ist und der einen relativ zur Y-Koordinate der Drehtischachse (D) ortsfest positionierten zweiten Antastkörper-Referenzpunkt (R2) aufweist, mit dem Messsystem des KMG und Bestimmung der Y-Koordinate des zweiten Antastkörper-Referenzpunkts (R2),
d) Wiederholen der Schritte b) und c) an einem oder mehreren späteren Zeitpunkten und Bestimmen der X-Koordinate und der Y-Koordinate der Drehtischachse an dem späteren Zeitpunkt, oder an den späteren Zeitpunkten, aus der X-Koordinate des ersten Antastkörper-Referenzpunkts (R1) und der Y-Koordinate des zweiten Antastkörper-Referenzpunkts (R2).

2. Verfahren nach Anspruch 1, bei dem der erste Antastkörper-Referenzpunkt (R1) auf der X-Koordinate, oder nahe bei der X-Koordinate der Drehtischachse (D) positioniert ist.

3. Verfahren nach einem der vorangehenden Ansprüche, bei dem der zweite Antastkörper-Referenzpunkt (R2) auf der Y-Koordinate, oder nahe bei der Y-Koordinate der Drehtischachse (D) positioniert ist.

4. Verfahren nach einem der vorangehenden Ansprüche, bei dem
- ein Unterschied ΔX zwischen der X-Koordinate des ersten Antastkörper-Referenzpunkts (R1) und der in Schritt a) ermittelten X-Koordinate der Drehtischachse (D) in dem KMG abgespeichert wird,
- ein Unterschied ΔY zwischen der Y-Koordinate des zweiten Antastkörper-Referenzpunkts (R2) und der in Schritt a) ermittelten Y-Koordinate der Drehtischachse (D) in dem KMG abgespeichert wird und
- ΔX und ΔY zur Bestimmung der X-Koordinate und der Y-Koordinate der Drehtischachse (D) in Schritt d) herangezogen werden.

5. Verfahren nach einem der vorangehenden Ansprüche, bei dem die Antastkörper (20, 21) ausgewählt sind aus einem Ring, einer Scheibe, einem Zylinder, einem Hohlzylinder einer Kugel, einem Endmaß, einem Innenkegel, einem Kugeltripel, oder einer Kombination davon.

6. Verfahren nach einem der vorangehenden Ansprüche, bei dem das Antasten des ersten Antastkörpers (20) und des zweiten Antastkörper (21) durch Scannen erfolgt.

7. Verfahren nach einem der vorangehenden Ansprüche, bei dem das Antasten in Schritt a)-c), vorzugsweise auch in Schritt d), mit einem Referenztaster erfolgt.

8. Koordinatenmessgerät, aufweisend eine Anordnung aus
- einem Drehtisch (3),
- einem Messsystem zum Antasten eines Prüfkörpers (9)
- einem neben dem Drehtisch (3) angebrachten ersten Antastkörper (20) mit einem ersten Antastkörper-Referenzpunkt (R1), der relativ zur X-Koordinate der Drehtischachse (D) ortsfest positioniert ist,
wobei der erste Antastkörper-Referenzpunkt (R1) so zur X-Koordinate der Drehtischachse (D) positioniert ist, dass der Unterschied ΔX zwischen der X-Koordinate des ersten Antastkörper-Referenzpunkts (R1) und der X-Koordinate der Drehtischachse 0 bis 3 mm beträgt,
- einem neben dem Drehtisch (3) angebrachten zweiten Antastkörper (21) mit einem zweiten Antastkörper-Referenzpunkt (R2), der relativ zur Y-Koordinate der Drehtischachse (D) ortsfest positioniert ist,
wobei der zweite Antastkörper Referenzpunkt (R2) so zur Y-Koordinate der Drehtischachse (D) positioniert ist, dass der Unterschied ΔY zwischen der Y-Koordinate des zweiten Antastkörper-Referenzpunkts (R2) und der Y-Koordinate der Drehtischachse 0 bis 3 mm beträgt,
wobei der erste Antastkörper-Referenzpunkt (R1) und der zweite Antastkörper-Referenzpunkt (R2) jeweils reproduzierbar mit dem Messsystem erfasst werden kann.

9. Koordinatenmessgerät nach Anspruch 8, bei dem der erste Antastkörper-Referenzpunkt (R1) auf der X-Koordinate der Drehtischachse (D) positioniert ist.

10. Koordinatenmessgerät nach Anspruch 8 oder 9, bei dem der zweite Antastkörper-Referenzpunkt (R2) auf der Y-Koordinate der Drehtischachse (D) positioniert ist.

11. Koordinatenmessgerät nach Anspruch 8, bei dem der erste Antastkörper (20) in Y-Richtung variabel positionierbar ist und/oder der zweite Antastkörper (21) in X-Richtung variabel positionierbar ist.

12. Koordinatenmessgerät nach einem der Ansprüche 8 bis 11, das zur Durchführung des Verfahrens nach einem der Ansprüche 1-7 eingerichtet ist.

## Claims

1. Method for determining the location of a rotary table axis (D) in the machine coordinate system of a coordinate measuring machine CMM, comprising:
a) sensing a test body (9), situated on the rotary table (3), in a plurality of rotary table positions using a measuring system of the CMM and determining the X-coordinate and Y-coordinate of the rotary table axis (D) in the machine coordinate system (X_{CMM}, Y_{CMM}, Z_{CMM}, Z'_{CMM}) from the sensing points,
**characterized in that** the method furthermore comprises:
b) sensing a first sensing body (20), which is attached next to the rotary table (3) and which comprises a first sensing body reference point (R1) positioned in a stationary manner relative to the X-coordinate of the rotary table axis (D), using the measuring system of the CMM and determining the X-coordinate of the first sensing body reference point (R1),
c) sensing a second sensing body (21), which is attached next to the rotary table (3) and which comprises a second sensing body reference point (R2) positioned in a stationary manner relative to the Y-coordinate of the rotary table axis (D), using the measuring system of the CMM and determining the Y-coordinate of the second sensing body reference point (R2),
d) repeating steps b) and c) at one or more later times and determining the X-coordinate and the Y-coordinate of the rotary table axis at the later time, or at the later times, from the X-coordinate of the first sensing body reference point (R1) and the Y-coordinate of the second sensing body reference point (R2).

2. Method according to Claim 1, wherein the first sensing body reference point (R1) is positioned on the X-coordinate, or in the vicinity of the X-coordinate, of the rotary table axis (D).

3. Method according to one of the preceding claims, wherein the second sensing body reference point (R2) is positioned on the Y-coordinate, or in the vicinity of the Y-coordinate, of the rotary table axis (D).

4. Method according to one of the preceding claims,
wherein
- a difference ΔX between the X-coordinate of the first sensing body reference point (R1) and the X-coordinate of the rotary table axis (D) established in step a) is stored in the CMM,
- a difference ΔY between the Y-coordinate of the second sensing body reference point (R2) and the Y-coordinate of the rotary table axis (D) established in step a) is stored in the CMM, and
- ΔX and ΔY are used for determining the X-coordinate and the Y-coordinate of the rotary table axis (D) in step d).

5. Method according to one of the preceding claims, wherein the sensing bodies (20, 21) are selected from a ring, a disk, a cylinder, a hollow cylinder, a sphere, a gauge block, a female taper, a triple sphere or a combination thereof.

6. Method according to one of the preceding claims, wherein the sensing of the first sensing body (20) and of the second sensing body (21) is brought about by scanning.

7. Method according to one of the preceding claims, wherein the sensing in steps a)-c), and preferably also in step d), is brought about using a reference probe.

8. Coordinate measuring machine comprising an arrangement of:
- a rotary table (3),
- a measuring system for sensing a test body (9),
- a first sensing body (20), attached next to the rotary table (3), comprising a first sensing body reference point (R1) which is positioned in a stationary manner relative to the X-coordinate of the rotary table axis (D), wherein the first sensing body reference point (R1) is positioned in relation to the X-coordinate of the rotary table axis (D) in such a way that the difference ΔX between the X-coordinate of the first sensing body reference point (R1) and the X-coordinate of the rotary table axis is 0 to 3 mm,
- a second sensing body (21), attached next to the rotary table (3), comprising a second sensing body reference point (R2) which is positioned in a stationary manner relative to the Y-coordinate of the rotary table axis (D), wherein the second sensing body reference point (R2) is positioned in relation to the Y-coordinate of the rotary table axis (D) in such a way that the difference ΔY between the Y-coordinate of the second sensing body reference point (R2) and the Y-coordinate of the rotary table axis is 0 to 3 mm,
wherein the first sensing body reference point (R1) and the second sensing body reference point (R2) can respectively be acquired in a reproducible manner by the measuring system.

9. Coordinate measuring machine according to Claim 8, wherein the first sensing body reference point (R1) is positioned on the X-coordinate of the rotary table axis (D).

10. Coordinate measuring machine according to Claim 8 or 9, wherein the second sensing body reference point (R2) is positioned on the Y-coordinate of the rotary table axis (D).

11. Coordinate measuring machine according to Claim 8, wherein the first sensing body (20) can be positioned in a variable manner in the Y-direction and/or the second sensing body (21) can be positioned in a variable manner in the X-direction.

12. Coordinate measuring machine according to one of Claims 8 to 11, configured for performing the method according to one of Claims 1-7.

## Revendications

1. Procédé de détermination de la position d'un axe (D) d'une table tournante dans un système de coordonnées d'appareil d'un appareil de mesure de coordonnées, KMG, comprenant :
a) le balayage d'un corps de test (9) se trouvant sur la table tournante (3) dans plusieurs positions de la table tournante avec un système de mesure du KMG et la détermination de la coordonnée X et de la coordonnée Y de l'axe (D) de la table tournante dans le système de coordonnées d'appareil (X_{KMG}, Y_{KMG}, Z_{KMG}. Z'_{KMG}) à partir des points balayés,
**caractérisé en ce que** le procédé comprend en outre:
b) le balayage d'un premier corps de balayage (20) qui est monté à côté de la table tournante (3) et qui présente un premier point de référence de corps de balayage (R1) positionné fixement par rapport à la coordonnée X de l'axe (D) de la table tournante, avec le système de mesure du KMG et la détermination de la coordonnée X du premier point de référence du corps de balayage (R1),
c) le balayage d'un deuxième corps de balayage (21) qui est monté à côté de la table tournante (3) et qui présente un deuxième point de référence de corps de balayage (R2) positionné fixement par rapport à la coordonnée Y de l'axe (D) de la table tournante, avec le système de mesure du KMG et la détermination de la coordonnée Y du deuxième point de référence de corps de balayage (R2),
d) la répétition des étapes b) et c) à un ou plusieurs instants ultérieurs et la détermination de la coordonnée X et de la coordonnée Y de l'axe de la table tournante à l'instant ultérieur, ou aux instants ultérieurs, à partir de la coordonnée X du premier point de référence de corps de balayage (R1) et de la coordonnée Y du deuxième point de référence de corps de balayage (R2).

2. Procédé selon la revendication 1, dans lequel le premier point de référence de corps de balayage (R1) est positionné sur la coordonnée X ou à proximité de la coordonnée X de l'axe (D) de la table tournante.

3. Procédé selon l'une quelconque des revendications précédentes, dans lequel le deuxième point de référence de corps de balayage (R2) est positionné sur la coordonnée Y ou à proximité de la coordonnée Y de l'axe (D) de la table tournante.

4. Procédé selon l'une quelconque des revendications précédentes, dans lequel
- une différence ΔX entre la coordonnée X du premier point de référence de corps de balayage (R1) et la coordonnée X, déterminée à l'étape a), de l'axe (D) de la table tournante est mémorisée dans le KMG,
- une différence ΔY entre la coordonnée Y du deuxième point de référence de corps de balayage (R2) et la coordonnée Y déterminée à l'étape a) de l'axe (D) de la table tournante est mémorisée dans le KMG et
- ΔX et ΔY sont utilisées pour la détermination de la coordonnée X et de la coordonnée Y de l'axe (D) de la table tournante à l'étape d).

5. Procédé selon l'une quelconque des revendications précédentes, dans lequel les corps de balayage (20, 21) sont sélectionnés parmi une bague, un disque, un cylindre, un cylindre creux, une bille, un étalon, un cône interne, un triangle sphérique, ou une combinaison de ceux-ci.

6. Procédé selon l'une quelconque des revendications précédentes, dans lequel le balayage du premier corps de balayage (20) et du deuxième corps de balayage (21) s'effectue par scanner.

7. Procédé selon l'une quelconque des revendications précédentes, dans lequel le balayage aux étapes a)-c), de préférence également à l'étape d), s'effectue avec un palpeur de référence.

8. Appareil de mesure de coordonnées, présentant un agencement constitué :
- d'une table tournante (3),
- d'un système de mesure pour balayer un corps de test (9),
- d'un premier corps de balayage (20) monté à côté de la table tournante (3), avec un premier point de référence de corps de balayage (1) qui est positionné fixement par rapport à la coordonnée X de l'axe (D) de la table tournante,
le premier point de référence de corps de balayage (R1) étant positionné par rapport à la coordonnée X de l'axe (D) de la table tournante de telle sorte que la différence ΔX entre la coordonnée X du premier point de référence de corps de balayage (R1) et la coordonnée X de l'axe de la table tournante soit comprise entre 0 et 3 mm,
- d'un deuxième corps de balayage (21) monté à côté de la table tournante (3), avec un deuxième point de référence de corps de balayage (R2) qui est positionné fixement par rapport à la coordonnée Y de l'axe (D) de la table tournante,
le deuxième point de référence de corps de balayage (R2) étant positionné par rapport à la coordonnée Y de l'axe (D) de la table tournante de telle sorte que la différence ΔY entre la coordonnée Y du deuxième point de référence de corps de balayage (R2) et la coordonnée Y de l'axe de la table tournante soit comprise entre 0 et 3 mm,
le premier point de référence de corps de balayage (R1) et le deuxième point de référence de corps de balayage (R2) pouvant être à chaque fois détectés de manière reproductible avec le système de mesure.

9. Appareil de mesure de coordonnées selon la revendication 8, dans lequel le premier point de référence de corps de balayage (R1) est positionné sur la coordonnée X de l'axe (D) de la table tournante.

10. Appareil de mesure de coordonnées selon la revendication 8 ou 9, dans lequel le deuxième point de référence de corps de balayage (R2) est positionné sur la coordonnée Y de l' axe (D) de la table tournante.

11. Appareil de mesure de coordonnées selon la revendication 8, dans lequel le premier corps de balayage (20) peut être positionné de manière variable dans la direction Y et/ou le deuxième corps de balayage (21) peut être positionné de manière variable dans la direction X.

12. Appareil de mesure de coordonnées selon l'une quelconque des revendications 8 à 11, qui est prévu pour mettre en oeuvre le procédé selon l'une quelconque des revendications 1 à 7.
